# EUROPEAN PATENT APPLICATION

(11) **EP 1 333 376 A1**
(43) Date of publication of application: **06.08.2003**
(21) Application number: 02425057.3
(22) Date of filing: 05.02.2002
(51) Int. Cl.: G06F 9/44

(54) **Encoding method for efficient storage, transmission and sharing of multidimensional virtual worlds**

(71) Applicant: Dominici, Fulvio, 10095 Grugliasco, Torino (IT)
(72) Inventor: Dominici, Fulvio, 10095 Grugliasco, Torino (IT)
(74) Representative: Marchitelli, Mauro

(57) **Abstract**

The invention relates to a coding system for storing whichever dimension multidimensional virtual worlds data, to the end of their high-speed transmission among information processing systems and their shared use and creation. With the proposed method, as for the invention, information needed to define three-dimensional objects and other entities needed to create a virtual world in space and time are stored into reusable procedural data structures. In this way a "compression by concepts" of virtual world data is done. Such data are not stored and transmitted as they are, but as abstractions of object categories. Such a technique allows to reuse any data structures any time an object of its type is requested; in this way the amount of data to store or transmit is greatly reduced, and the downloading and exploration of virtual worlds in real time even with low-speed connections are thus allowed. The technique also allows the definition of highly variable dimensions virtual worlds, from the subatomic to the cosmic one. The spatial and temporal extensions of each element are stored in a conceptual way too, as well as the coordinates of each entity in space and time.

## Description

### Field of the invention

The present invention relates to a method and a coding system to store and possibly transmit and share multidimensional virtual worlds to be visualized.

The invention applies to the informatics and telecommunication fields - the virtual reality sector particularly - with possible applications to videogames, simulations, learning environments and generally when it is requested to create, store or transmit multidimensional shared worlds, for example three-dimensional or quadrimensional, that can be viewed on electronic systems. The invention also applies to the exploration and creation of virtual spaces of whichever dimension, from the infinitely small to the infinitely large, explorable in time too.

### Background of the invention

The known virtual reality systems used in every field, from videogames to industrial simulations, store geometrical data of all objects present in any world and pass these data to a rendering pipeline that produces virtual images on a screen. To this end, the observer's movements are converted to positions of a virtual camera, looking to a portion of the scene stored on the system and reproducing it on the user's visualization device; scene data are loaded from some type of mass memory or from a data transmission network.

All known rendering pipelines need in memory all data of the scene to be visualized, stored in formats that request the definition of points in space, normally but not necessarily three-dimensional, as groups of coordinates defining polygons' vertices. Such polygons are texturized, i.e. various images are stuck on them to make them look more natural.

All data needed for the scene production, such as vertices coordinates, textures, etc., must be present in the visualization system memory at the time of representation.

The rendering pipelines do not define a standard format for the higher-level data, they only define the parameters needed for the showing of the low-level elements every scene object is made of, and these low-level elements are usually triangles.

Many formats for storing the high-level data have been proposed and all of them try to define groups of objects' vertices coordinates grouped in various ways, sometimes with a compression system. Those formats store all the coordinates of every scene polygon's vertex and so they produce huge data blocks that require high capacity storage systems and do not allow reasonable transmission times on low speed data networks, like Internet, of even low complexity worlds.

Furthermore, such formats do not allow the easy reuse of already-defined elements, because all the stored coordinates and parameters are fixed once and for all and may not be easily modified to fit them into new situations nor allow the easy reuse of scene portions in other worlds.

Many techniques have been proposed using distributed databases of entities or graphical elements for virtual worlds, some of them use an 'object-oriented' data structure. Every technique provides for the use of data, segmented in some way, essentially fixed, where the data groups that define every entity are almost unchangeable. Objects of every system introduced until now have been 'non-intelligent', with a limited reuse capacity and have forced the storage of a new data block for any entity of the same category with some differences from another.

The compression systems, when introduced, use some type of data reduction or different data codification for every world object, working almost every time on geometrical data or other kind of information relevant to the single object.

The few 'object-oriented' techniques proposed so far used the 'object-oriented' programming characteristics only relating to the inheritance, behaviour and possible services and attributes of every entity, instead of their efficient production, processing and sharing in virtual worlds.

All the techniques used so far do not support the creation and definition of huge dimensions virtual worlds (like whole universes) or, if they have tried this, do not support scale factor changing to explore any virtual world down to the subatomic level.

Consider an application that supports the creation of a virtual world as big as the known universe: we see that present techniques would not allow the definition of the single stars even, because the number of galaxies (more than one hundred billions) would make it impossible to store it on medium capacity information systems. In fact, if you think to store a small data group of ten bytes for every galaxy, the memory space needed would be more than one thousand gigabytes; so, imagine what will happen if we needed to store the data of every star and then of every planet, not to mention a possible magnification to the subatomic level of a part of any heavenly body.

At the other end, if we define a virtual world at the molecular level, on a traditional system it is impossible to manage groups of molecules defining even a single glass of water, because the number of elements is again in the range of billions of billions; no application has been proposed to seriously try to solve this problem.

Another important feature that will be more and more requested in the near future is the availability of virtual worlds production tools for every person wishing to create his own world. Tools now available allow the creation of virtual worlds only to experts in programming and computer graphics; the easiest tools allow only the creation of an home or little more. The highest difficulty lies in the fact that every person wishing to create a virtual world has to use very complex tools and activate them writing very complex programs.

Many virtual worlds developing tools have been introduced, some of them with collections of ready-made base elements.

In developing tools for videogames or architectural environments we find that standard objects libraries are not easily expandable and sharable with all other developers and once the virtual world is made there is not an easy way to enlarge a point of the scene beyond the level of detail defined by the author. In such a way not only atoms and molecules, but also low dimension structural elements (for example rock veins) are not visible.

To allow such a detail level, the author should define textures (the images stuck on virtual objects) of enormous dimensions, and the system would collapse.

If we add one further dimension to n-dimensional spaces (typically three-dimensional), to say we introduce time, things become even more complex. The possibility of exploration of a virtual world in every moment of its history has never been fully realized. Many systems for chemical or biological simulations allow for the visualization of the evolution in time of a studied environment, but do not support long periods of time, in different time scales, of worlds with macroscopic dimensions too. At the other end, many videogames tried to define long time periods, even many centuries, but they never went beyond worlds representing whole generic civilizations seen in the complex without defining the microscopic evolution of elements of the scenes, and did not allow the easy localizing of events or special places inside their quadrimensional coordinates system.

Many systems for group exploring of bidimensional (in some cases three-dimensional) worlds through a data network have been proposed. Such systems are almost in every case chat-line services that allow users to meet.

In all these environments users are represented by a virtual alter-ego, called avatar, that can be moved in the virtual environment and interact in some ways with the others, typically with text or voice messages. Many commercial videogames have been developed where users have a limited interaction capability (often by shooting) with the environment or with other users. Exploration of immense spaces or of subatomic worlds, in every point in time, has never been proposed. The problem of finding a point in space-temporal coordinates and to put the user at whichever dimensional scale has never been solved.

In the early decades of the twenty-first century we will see a rising degree of interest for the creation and exploration of virtual universes and from what already stated we can see that available techniques will not allow the requested developments.

### Summary of the invention

Relating to what already stated, the invention presents a new virtual world coding format that solves one or more of the problems as above mentioned.

This is achieved, according to the present invention, by a coding method and format with the characteristics of the attached claims, that are an integral part of the present description.

### Short description of drawings

Further purposes, characteristics and advantages of the present invention will be made clear from the following description, referring to the attached drawings:
Fig. 1 shows in schematic format a possible structure of data flows used in the method of the invention
Fig. 2 shows in schematic format an example of use of an archetype of a final object category, provided by the invention
Fig. 3 shows in schematic format the possibility of reuse of an archetype of a final object category inside another archetype describing more complex objects
Fig. 4 shows in schematic format the procedural nature of the archetypes provided by the invention
Fig. 5 shows in schematic format the functioning of a generation system provided by the invention, that is an automatic procedure using the archetypes
Fig. 6 shows in schematic format the scale factor concept used to define the spatial extent of the made environments, according to the invention method
Fig. 7 shows in schematic format the space-time definition concept provided by the invention.

### Detailed description of the invention

According to its first important concept, the present invention provides for the storage of conceptual contents of every virtual world, in place of contained objects' physical data.

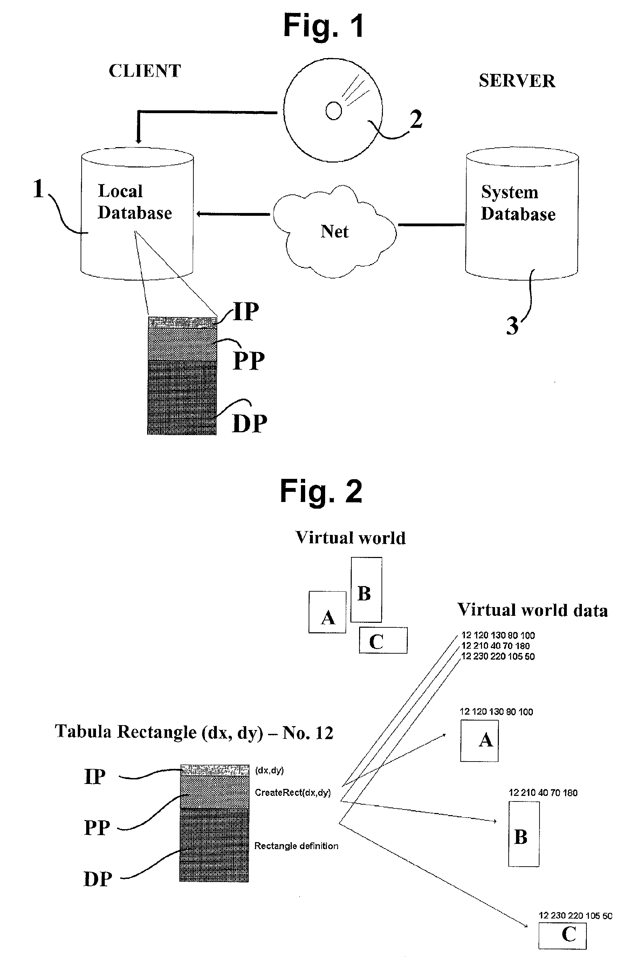

From this point of view, according to the invention, a conceptual coding system of every world element is proposed through the definition of the conceptual "type" of the element, added to a space subdivision technique using elements with variable level of detail. The various world elements are then completely categorized with the possibility to intelligently fit themselves to every case, varying not only their behaviour but all other characteristics, like their morphology, their molecular structure, the material they appear to be made of, their kinematical relations with other elements and so on. In such a way everyone is allowed to build up huge virtual worlds using the procedural self-adjusting capability of every world element to various use conditions that modify, even heavily, its structure as well its behaviour. With the proposed method, the final world visualization system, labelled in fig.1 as "CLIENT", maintains a local database of generic objects, labelled 1; according to the invention these generic objects, here called "tabulae", are archetypes, each one of a whole objects category.

The local database 1, may have an additional portion that was stored on a mass-memory, like a CDrom, labelled 2, to allow for the creation or extension of the local database 1 and to allow for the distribution of objects and worlds, to say tabulae, among many users, through physical memories.

The "CLIENT" is preferably connected to a remote computer, labelled with "SERVER", through a data transmission network, labelled "NET"; the remote computer "SERVER" has a system database, labelled 3; every user can pick up single tabulae from the system database 3 and publicly store others on it to allow the maximum availability of tabulae among the users of the system, with a model quite similar to the one originally used by "Napster".

When the user inserts a mass-memory (like a CDrom), its data are immediately incorporated into the local database of the "CLIENT" system; in case of connection with a "SERVER" remote computer, the single tabula data will be requested, when not already present in the local database 1, at the moment of the use of the tabula and then incorporated into the local database 1 to avoid further requests.

Note that this system does not provide for the direct storing of whichever data (graphical or other type) of the objects to visualize, but for the storing of the concept instead, of the "build up technique" of whole object categories expressed by the tabula.

From this point of view, this procedure is similar to what is already known in the Internet world, for example the World Wide Web pages, defined by the HTML script language; note that the tabulae transmission and local maintenance may be merged into every already known standard protocol.

As shown in fig.1, each tabula contains:
- a section of special data, labelled "DP", used for the particular object or environment visualization,
- a procedural section, labelled "PP",
- an interface section, labelled "IP", defining object parameters to let user set data to be passed to the tabula when it is called.

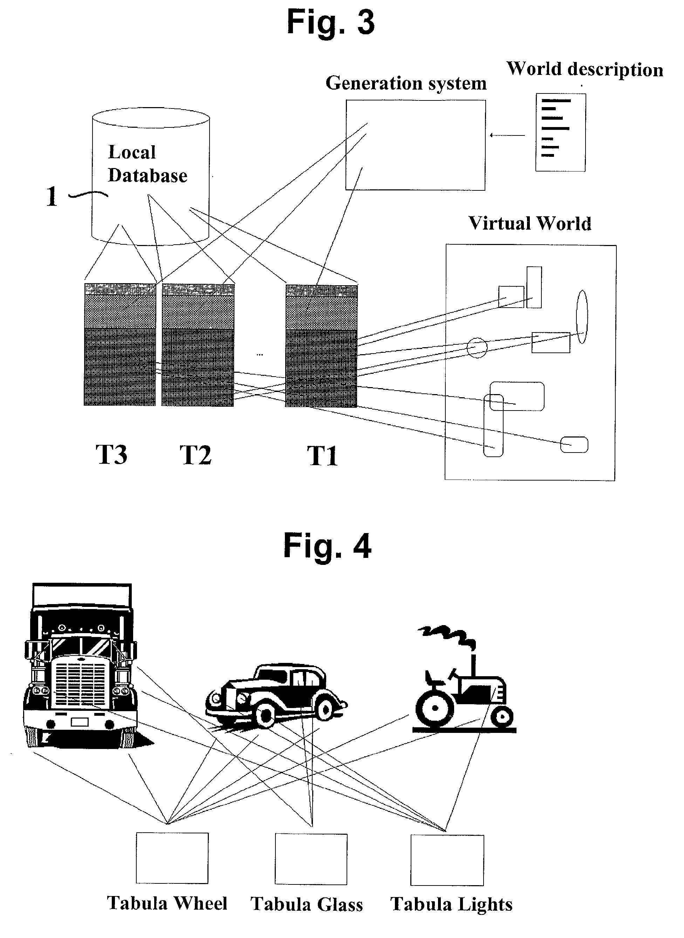

The procedural section "PP" is called to create, using the content of the data section "DP", a copy of a single object of the category expressed by the tabula, it gets in input parameters passed to interface "IP" by the generation system, pictured in fig. 3.

Fig. 2 shows a simple example of use of tabulae.

A "Rectangle" tabula, with the serial number 12, is used to create three rectangles in a virtual world by use of few data, labelled "virtual world data", defining the tabula number (i.e. 12), coordinates (here bidimensional) of the requested copy and all parameters needed to create it. Parameters pass through the tabula interface section IP, are processed in the procedural section PP with data DP needed by the tabula to create the requested objects.

Fig.2 case is very simple, but the very same principle can be used in the tabula "Fir", able to create the millions of leaves needed to create a tree from few initial parameters. The saving in data obtained through the invention for the definition of the virtual world becomes obvious.

The generation system is a procedure called on the "CLIENT" any time the user enters in a new virtual world and takes care of generating the low-level data from the conceptual high-level description of the world; these data are then stored to be processed by the rendering pipeline.

Fig. 3 shows the generation system, an automatic procedure using the local database's tabulae to generate the low-level elements of all the virtual world objects, reading an abstract conceptual description of it, labelled "World description".

The outputs from calls to the tabulae (in fig. 3 a tabula "Rectangle" T1, a tabula "Rounded rectangle" T2 and a tabula "Ellipses" T3) are all the low-level data (triangles, textures, sounds, kinematics,...) needed by the subsystems to produce the requested virtual reality.

Data describing a world are thus a series of calls to tabulae, along with the needed parameters for the correct creation of each element.

This series of calls is obviously very compact, it can express with few data even very complex elements. The translation from parameters to real object is made by the generation system of fig.3, output of this system are data needed by the rendering pipeline for the final world rendering (triangles, sounds, kinematics,...)

In this way each world is made by series of references to tabulae that create geometrical objects and other type of objects, producing coordinates, polygons and anything else needed, passing them to the rendering pipeline. This generation phase takes place only when there is a variation in the environment and needs not to be repeated while the user explores it.

The idea of storing by concept instead of storing directly by data must be extended in a gerarchical fashion: with this method each tabula does not store all data and procedures needed to generate its object, but it calls other tabulae for each element of its structure instead, directly defining only those elements without any possibilities of decomposition into their structural elements.

With this method, tabulae defining more complex objects use tabulae defining simpler elements, passing them the portion of data receive through their interface IP needed to generate the lower-level elements, properly pre-processed by their procedure PP.

This concept is sketched in fig.4, showing the possibility of reuse of tabulae inside other tabulae describing more complex objects. In this example the "Wheel" tabula is called inside a "Truck" tabula, a "Car" tabula and in a "Tractor" tabula; in all these tabulae data needed to create the wheel are not directly stored, but instead it is only called the base tabula "Wheel", with the parameters needed to create the requested wheel for the higher level tabula. The same thing happens for all other elements, of which are depicted, by way of example, "Glass" and "Lights" tabulae.

The procedural nature of tabulae allows for the definition of each object with a practically endless series of possible parameters values, that can derive from a former algorithmic processing.

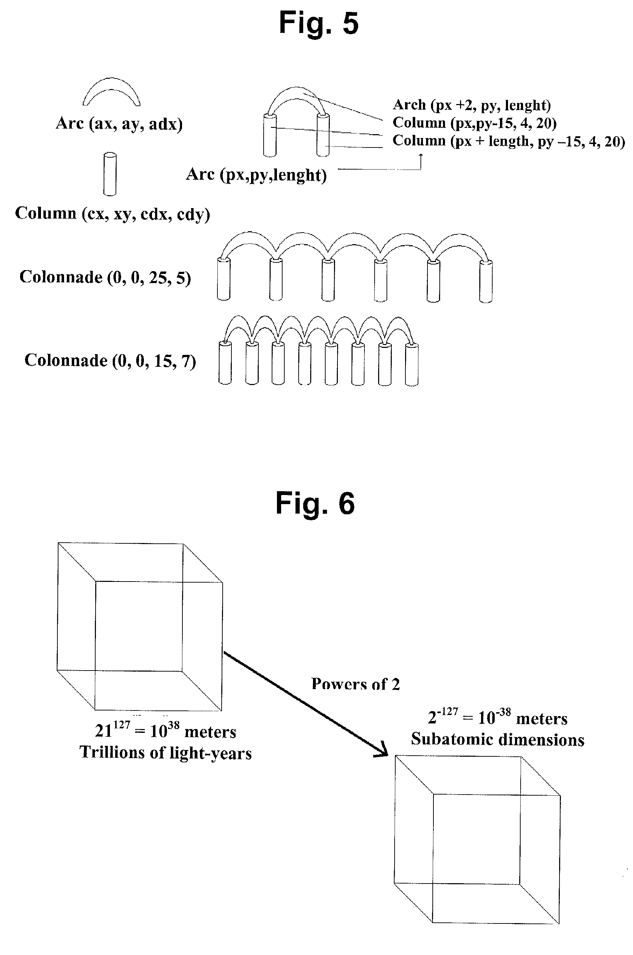

In fig.5, for example, is shown how programmable tabulae that produce architectural elements may be called by other tabulae passing them parameters derived by the processing of data they received in input. In the example it is shown how a tabula defining a colonnade may call a programmable number of times the arch tabula, moving each time the creation point to cover all colonnade width.

In more details, the "Column" tabula, creating a column at "cx","cy" position with diameter "cdx" and eight "cdy", is used along the "Arc" tabula that creates an arc at "ax","ay" position with "adx" span. The "Arch" tabula creates an arch at position "px","py" of span "length" and it is able to create that arch of a specified span at a specified point of a virtual world simply by calling two times the "Column" tabula with two different x coordinates and the "Arc" tabula to create the architrave. The "Arch" tabula may be further used by other tabulae, and in fig.5 two examples are shown of a tabula "Colonnade" that creates an arcade in a specified point, with programmable span arches and programmable number of arches. In this example two different calls are shown, creating two different arcades, to intuitively show the power of virtual world definition through intelligent procedural objects.

Obviously, many similar examples may be shown, referring to the definition of a fence, or a church's rose window, or all those elements that can be generated by repetition of base structures translated, rotated or deformed at each step.

By this system, as the complexity of objects generated by a tabula rises, it does not increase its dimensions but rather increases the base of calls to simpler tabulae defining the lower level elements, shared among higher level tabulae; in this way it is possible to define a huge number of tabulae, without significantly increasing the local database 1 dimensions.

This non-linear increase of the local database 1 dimensions produces an enormous reduction of the storage space needed and the transmission time of new tabulae when there is a network connection as shown in fig.1 . Even a whole world may be stored into a tabula and can be uniquely created in one case or became a tabula stored inside another bigger world in another.

The essential advantage of this system, as provided by the invention, is indeed in the definition of every thing as a tabula; no other type of data storage exists, because every virtual world entity is a tabula, and it may be reused in other situations and each tabula is able to adapt itself to different requests with various parameters passed to its interface IP.

Obviously, this method does not apply only to three-dimensional objects, but it is used to define all virtual world entities: sound, images, kinematics, virtual characters' artificial intelligence methods and so on.

A tabula-based virtual world description system must be completely described with this technique, with an enormous reduction of the dimensions of needed data compared to standard techniques.

This system, as provided by the invention, is clearly different from any similar thing already known: in the few system suggesting some objects programmability, the processing portions are every time incorporated into the main program in a fixed way; the invention suggests instead to let the processing portion of each object be carried by the tabula itself; in this way it is possible to develop new procedures when necessary, whereas in a fixed programs system it is not possible to create new objects with new behaviours.

Another important aspect of the invention is that it allows immediate explorations of virtual worlds, whose tabulae are not been yet delivered by a data network to the final rendering system.

Assume that the user wants to visualize on his local system "CLIENT" a virtual world available on an Internet site: in case of low transmission speed a significant amount of time may be needed to receive all the requested tabulae yet unavailable on the local database 1. In this case all similar systems already known would stop the visualization or they would go on with it without the missing data.

The invention provides for a system to immediately start the visualization in this case too. To this end, as for the invention, each tabula reference contains an alternative, or alias, tabula reference, used by the local system when the main tabula is unavailable.

For example, assume a row of maples is needed to be shown and in the local database the tabula "Maple" is not present: the generation system would instead use the tabula "Poplar", that is the alias tabula of the "Maple" tabula, to immediately represent the trees row anyway. As soon as the "Maple" tabula arrives from the network, the trees row will take its proper aspect.

There are two basic conditions to make this invention's aspect feasible: a) every reference to a tabula of any virtual world must contain a reference to another alias tabula, and b) the tabulae usable as aliases must be present in the local database 1 at any time.

In practice, a collection of "base" tabulae will be defined, these tabulae will be inserted into the local database at system installation time and each virtual world author will have to specify alias tabulae only from this group surely always present.

The tabulae system provides for the easy reuse of created entities when new worlds are created. The reuse feature benefits from an inheritance technique that allows the user to modify portions of the tabulae to create new versions with partial differences from the originals.

This technique allows the creation of a new tabula as a copy of another one, with some modifications to obtain objects similar but different from those produced by the original tabula; this technique further reduces the amount of data needed for the storage and transmission of tabulae and simplifies the work of those defining new types of objects.

The method as for the invention also allows the definition of worlds with only sketched out tabulae or with incomplete data, from a default level.

The future improvements of the objects representation will allow automatic improvements of the worlds these objects are used in, with no need to rewrite any codes. In traditional techniques the set of data defining any object is fixed, if somebody does not revisit the code; with the techniques provided by the invention, on the contrary, authors do not have to work again on their creations, that are automatically improved whenever a tabula used in them is improved or modified in any way.

The technique as for the invention is oriented toward the creation of many different virtual worlds, where authors reuse objects already created by others and create some new ones when it is not possible to derive them from already-existent objects through operations such as copy and modify.

To this end, the invention proposes preferably a strongly cooperative environment, to say it allows a full condivision of the system tabulae database (i.e. the "Server database" in fig.3) among all authors, through a development method that lets anybody- not necessarily expert in programming or computer graphics- use a wide collections of predefined objects.

The development system preferably provides guided procedures allowing the creation of even very complex worlds through few easy questions; these systems, well known in the information processing world, are usually called *wizards*.

In this way, the invention gives to each user/author a big series of wizards to automatically create virtual worlds. An example of such procedures is a wizard for the creation of entire planets that, after proposing some standard models, allows the user to modify the percentage of surface grounds, the atmosphere composition and other parameters, then creates a brand new planet with all those parameters; such wizards should be in turn procedural entities, stored in tabulae and freely called from worlds or tabulae eventually defined.

According to one of its important aspects, the invention allows the subdivision of space in multidimensional entities with variable level of detail.

The storage of huge dimensions worlds, explorable from a point of view ranging from cosmic to subatomic dimensions, would produce big amounts of data to process; in theory this kind of storage would be impossible for any actual or forthcoming information processing system.

To this extent, as for the invention, a special type of tabula is provided, here called *cellula,* defining the geometrical limits of a world element in a gerarchical way.

This special tabula, or cellula, defines a n-dimensional parallelepiped (typically quadrimensional) with a centre inside, used to specify all spatial coordinates (in meters and possibly temporal coordinates in seconds too) of any entity contained in it.

Those entities are other cellulae and the proposed breakdown follows that of the human conceptual logic. Take, for example, the solar system: the cellula that defines it breaks down in others representing all the entities present; for example, one of the called cellulae will be that of planet Earth, another one that of the Halley comet and so on.

Each of those cellulae will break down in others; that of Earth will call the European continent cellula, the northern America one and so on; the European cellula will break down in those of Italy, France and so on. Each called cellula will have lesser dimensions of the 'mother' and will define its decomposition in parts by calling other cellulae that will in turn define their particulars in smaller details.

Each cellula will get from the mother cellula the position of its centre in spatial-temporal coordinates relative to the mother cellula centre and its extension in space and time relative to its centre.

In fig.6 it is schematically shown the cellulae scale factor concept: by use of powers of 2 of the base 'meters' it is possible to go from a cellula containing the entire universe to one containing a subatomic particle in few steps.

The generation system schematically shown in fig.3 will call a specific tabula for each cellula that will determine the requested level of detail according to the observer distance; this procedure will then generate the low-level data used by the rendering pipeline or call the smaller dimension cellulae that build up the one in process.

The user, indeed, would be unable to appreciate an object as small as one millimetre in size placed far away, on the top of a mountain maybe, and this useless level of detail would overload the system. If the user's sight, instead, stops upon a jewel beyond a shop-window, the system would try to use an even smaller cellula, at least containing only the jewel, to create a very sharp representation of the jewel's filigree.

The correct level of -detail has to be chosen automatically, as well as the research and use of the tabula containing the wanted cellula; if this tabula is not defined, the generation system would use the first bigger dimension cellula containing the wanted one.

The cellulae containing roughly defined areas will have a sufficient level of detail when observed from far away, but not satisfactory when the user comes near. To this extent, according to a third important feature of the invention, a system for the automatic generation of details not defined by the author is proposed.

In all those cases when a more detailed cellula is needed, but not defined, an automatic system has to be activated to create the higher detail needed, starting from the rough definition of the bigger cellula, using a procedural generation system defined inside a particular tabula.

To let such a system work, the category of each object defined inside a cellula has to be specified, so that its detail may be augmented if needed.

For example, a cellula containing the entire planet Earth should not define smaller cellulae for all those areas of the planet covered by the oceans. For the Pacific Ocean portion, for example, the information that the area is made of sea water would suffice, setting a specific tabula for detail increase. If the observer wants to go to a point in the Pacific ocean, the generation system, unable to find a cellula with enough detail, would then call an automatic detail generation system that, using the specified tabula (in this case the sea water tabula), would produce waves, wind, salinity and any other needed elements to create a realistic environment. If the user needs to improve the level of detail, the sea water tabula would call that of the water as a chemical compound that would show to the user a water molecules expanse. It would then be possible to go down to the hydrogen atom level, then to that of the proton and so on.

The proposed technique does not want to define each subatomic particle of the universe, but the rules grouping such elements at any scale level instead; in such a way the user would not observe the *precise* particle that would *exactly* be at his point of interest, but a generic element of that category, created by use of precise rules; rules reusable at each point of the virtual universe.

An important observation has to be made: the invention allows the exploration of universes of any dimensions at whichever level of detail, taking care of automatically define elements that the author would never be able to set with such a precision level, but it also allows the author to set *exactly* whichever structure at any detail level, when necessary. This allows, for example, to create a meadow as a generic expanse of grass and to go down, if needed, to detail exactly a proton of a chlorophyll atom inside a cell of a specific blade of grass. An author wanting to define such a proton would be able, by use of the same system and without any need to change the data structure, to define a mountain on the side of the meadow and an entire galaxy containing the planet of the meadow.

The proposed subdivision allows to change the level of detail not only on the basis of the observer distance, but also on that of the processing power, passing a "spend" coefficient to the procedural phase that can decide the right representation (with more or less detail) on the basis of the available processing power.

The invention allows the subdivision in cellulae of *every* element of the virtual world. All techniques proposed so far never confronted with nor solved a big problem arising when entire universes are defined: all elements are moving. If we define the solar system cellula, for example, planet Earth does not stay in a fixed position but it follows a precise orbit. So, for each object defined inside a bigger cellula, a reference to a tabula containing the object motion equation has to be defined. From this equation the coordinates of the centre of the cellula containing the object at some moment in time may be calculated; this cellula then defines its coordinates system, fixed with the object.

In this way the invention solves the problem of defining dynamic universes, explorable in time too; it is thus possible to observe the solar system millions of years in the past and the universe in each phase of its existence and create countless universes with completely different evolutions.

During spatial-temporal exploration of virtual universes arises the problem of defining a coordinate system allowing the univocal determination of any object's position in space and time; if the temporal coordinate is simply defined, the spatial one greatly varies with laws not always linear. To this extent the invention provides for the storage of the temporal coordinates of quadrimensional points by use of the numerical value of seconds elapsed from a fixed point in time, for example the start of the current universe. The spatial position of each object then is not defined in absolute coordinates from a "cosmic centre", but it is defined as the gerarchical sequence of cellulae to pass through to arrive to the object. So each point in space is specified as a sequence of numbers recording the tabula of each cellula you have to pass through to arrive to the object's one. The starting cellula of the sequence is always the same one containing the entire virtual universe; from this one the serial number of the cellula containing the following macro subdivision of the universe is specified. So, for a virtual universe simulating the physical one, from the cellula containing the entire universe it would be possible to arrive to the one containing our galaxy simply specifying the serial number of its cellula. Such a sequence may be, for example, 117 -> 215, where 117 is the serial number of the cellula containing the entire universe and 215 the serial number of the cellula containing the Milky Way galaxy. In such a way, once the temporal coordinate is set, the procedural part of the tabula of the "Milky Way" cellula is able to calculate the galaxy centre at the desired time and correctly position the galactic cellula inside the space of the entire universe cellula. In the same way, the next spatial coordinate may be , for example, 1674 (solar system) and may refer to the tabula of the cellula of our star system as a procedure that calculates its centre inside the galaxy at the specified point in time. The next coordinate may specify the Earth cellula and then that of a city and so on.

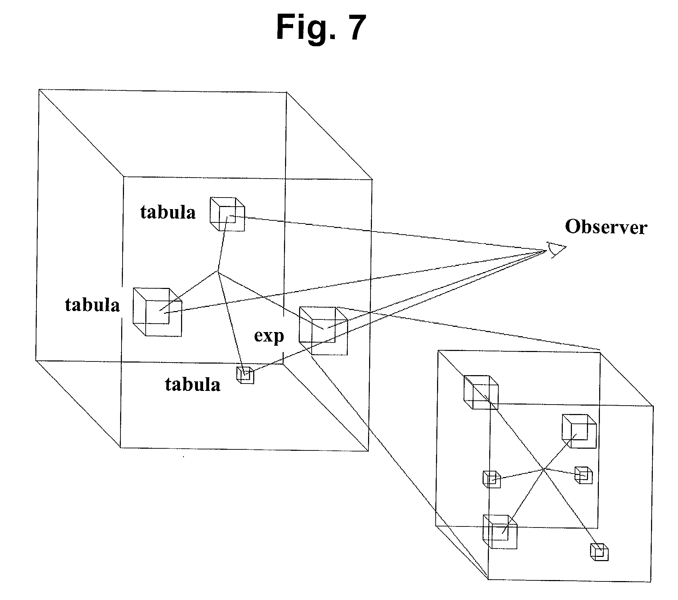

In fig.7 it is schematically shown the space-time cellular definition concept. As said, each element of the virtual world is defined inside a quadrimensional cellula; such a cellula, extending for some amount of space and time, calls other cellulae that define subgroups of objects positioned in relation to the mother cellula by use of an appropriate equation. Each cellula decides, according to the available processing power and the observer distance, if it needs to call a tabula to produce an element's approximation (tabula) or call all the cellulae defining each part in more details (exp).

So doing, the invention allows to set a point in time specifying its spatial position in a conceptual way, thus delivering a more precise information than the simple three-dimensional coordinates. An object's position does not change in conceptual coordinates (except for the time component), but it can move quite a lot when time changes, allowing whichever user to find it very easily.

The procedures of each tabula used to create each object know the different configurations the object had in time, so they can create different cellulae for each time period, containing different sub objects in different times. A city, for example, has a bigger or smaller dimension in time and many of its parts (monuments, for instance) may exist or not in different historical moments.

In this way a conceptual spatial coordinate may be invalidated from the point when it tries to create a cellula that does not exist at the time specified. Think, for instance, at the coordinates of the city of Rome: in the Jurassic such coordinates would not have any sense and the system would stop to the generic planet Earth; it would be unable to go any further because the cellula of the city of Rome would not exist as a subcellula of the Earth cellula at that time.

Such a system is rather different from what is already known as octrees and LOD (variable Level Of Detail) systems: in these techniques all coordinates of every object are fixed inside a cubic spatial reference system and the variable level of detail is applied only to the geometric components of the objects.

The invention provides for a new method for the specification of spatial-temporal coordinates of objects, introducing time and a position that varies with it, while the variable level of detail is produced as the visualization of a bigger or smaller number of objects according to the cellula dimensions and position in respect to the observer. Systems using octrees do not provide for an automatic system able to generate all details not created by the author when the user needs them in a coarsely defined zone.

From this description all characteristic of the present invention are made clear.

Particularly, a coding technique for the storage of any dimensions quadrimensional virtual worlds data has been described, for the purpose of their high speed transmission through information processing environments as well as their sharing capability in using and creation.

According to the invention, all information needed to define three-dimensional objects and other entities useful for the construction of a virtual world in space and time are stored in reusable procedural data structures, so that the representation of such objects and entities is the result of a procedure or program.

So the invention is based on a "compression by concepts" of virtual world data, not stored and transmitted as they are, but as abstractions of archetypes of object categories. Such technique allows to reuse each data structure every time an object of the type expressed by it is required; in this way the amount of data to be stored or transmitted is greatly reduced, thus allowing the downloading and exploration of virtual worlds in real time, even with low-speed connections.

The technique allows to define virtual worlds with highly variable dimensions, from the subatomic to the cosmic one; moreover, the spatial and temporal extension of each element is stored conceptually too, as well as coordinates of each entity in space and time.

The description made clear the invention advantages, of witch the following may be stressed:
1. the possibility to easily create three-dimensional and quadrimensional worlds, where people may be users and authors at the same time, without any interruption:
2. the possibility to define virtual universes, with the easy sharing of what already done by others, so as to create new ideas and do not recreate every time what had already been created somewhere else;
3. the possibility to define virtual worlds of huge dimensions, explorable down to the subatomic level, without any risks to overload the limited resources of electronic systems;
4. the possibility to define virtual spaces in time, so as to allow the exploration of entire universes in each moment of their history;
5. the possibility to explore in group of people or to set rendezvous in the created quadrimensional worlds; this allows a number of users to meet and have experiences together.

Another big advantage of the invention arises from the fact that the proposed technique does not request to define each element of the world to create, but it allows the automatic creation of new elements when needed, even if not created before by the author, built on the fly by the electronic system by use of predefined generic rules.

The enclosed sketches have illustrated rather than limited the invention; it is clear that numerous alternatives may be proposed without falling outside of the scope of this invention; from this point of view, partial implementations of the techniques described or different subdivisions of data, spatial as well as of tabula, are possible, without producing techniques other than that illustrated here.

## Claims

1. A coding method for the visualization of n-dimensional virtual worlds in an information processing system, where a virtual world is made of a plurality of different viewable end entities, with the characteristic that the virtual world is generated by the execution of a plurality of archetypical procedural elements (Tabulae) stored in a database (1,3) on the information processing system, each procedural element (Tabula) produces an archetype of the category of entities to which belongs each final entity of the virtual world to be visualized.

2. A method, as claimed in claim 1, **characterized by** the fact that each procedural element (Tabula) comprises:
a. A specific data section (DP), containing data needed for the creation and visualization of its final entity,
b. A procedural section (PP), usually separated from the code of a main program, that visualizes the world and starts execution of the procedural elements (Tabulae)
c. An interface section (IP), to define all parameters of the final entity.

3. A method, as claimed in claim 1, **characterized by** the fact that the procedural section (PP) is activated to generate a copy of a single entity of the category expressed by the relative procedural element (Tabula) and gets in input parameters passed to the interface section (IP) from a data generation system.

4. A method, as claimed in claim 1, **characterized by** the fact that procedural elements (Tabulae) are used, calling one or more procedural elements (Tabulae); the procedural elements (Tabulae) defining more complex end entities call procedural elements (Tabulae) of simpler end entities, the first ones passing to the seconds portions of data, received from their interface sections (IP), necessary to the simpler end entities generation.

5. A method, as claimed in claim 1, **characterized by** the fact that it is possible to store an entire virtual world in a procedural element, to uniquely create it or to incorporate it into another larger virtual world, defined by its procedural element (Tabula)

6. A method, as claimed in claim 1, **characterized by** the fact that each procedural element (Tabula) may be defined as a copy of another procedural element (Tabula) with one or more modifications.

7. A method, as claimed in claim 1, **characterized by** the fact that the sharing of the data base (1,3) among a plurality of users through a data transmission network (NET) is allowed.

8. A method, as claimed in claim 1, **characterized by** the fact that guided procedures to choose or define the virtual world are provided.

9. A method, as claimed in claim 1, **characterized by** the fact that the virtual world space subdivision in multidimensional entities with variable level of detail is provided.

10. A method, as claimed in claim 1, **characterized by** the fact that at least some procedural elements (Tabulae) define the geometrical limits of virtual world elements in a gerarchical way.

11. A method, as claimed in claim 1, **characterized by** the fact that at least some procedural elements (Tabulae) define a relative volume in the form of a n-dimensional parallelepiped, typically quadrimensional, inside which a centre is specified and where all spatial, and possibly temporal, coordinates of each final entity inside the volume are relative to this centre, each final entity being represented by its procedural element (Tabula)

12. A method, as claimed in claim 1, **characterized by** the fact that a procedural element (Tabula) receives from the upper gerarchical element its centre position in spatial and/or temporal coordinates, relative to the centre of the upper gerarchical element, and possibly its dimensions in space and/or time, relative to its centre.

13. A method, as claimed in claim 1, **characterized by** the fact that the procedural elements (Tabulae) create the final entities visualization with different level of details, according to the point of observation of the virtual world.

14. A method, as claimed in claim 1, **characterized by** the fact that unique procedural elements (tabulae) are used to show end entities in mutually different virtual worlds.

15. A method, as claimed in claim 1, **characterized by** the fact that a subdivision of end entities in gerarchical groups of spatial subsets with rising level of detail is provided, where the selection of a subset is made on the basis of the distance from the point of observation of the virtual world and/or the processing power of the information processing system.

16. A method, as claimed in claim 1, **characterized by** the fact that the rising of the level of detail in subsets of the virtual world not already defined is made by an automatic procedure.

17. A method, as claimed in claim 1, **characterized by** the fact that the data base (1,3) is at least partially located into a client system connected to a data transmission network (NET) where, to the end of the visualization of a virtual world on a local terminal (CLIENT), the transmission on the network of reference codes of particular procedural elements present into the database is provided.

18. A method, as claimed in claim 1 or claim 17, **characterized by** the fact that at least some of the main procedural elements (Tabulae) contain a reference to a particular alternative procedural element surely present into the local database (1,3), each alternative procedural element is used when its main element is not available into the database (1,3).

19. A coding system for the representation of n-dimensional virtual worlds on a user terminal (CLIENT), made by:
a. A visualization system
b. A memory subsystem containing at least a program (Generation system) to let the user create a virtual world to show
c. A rendering pipeline, to generate the images of the virtual world to show on the visualization system, starting from the codified data
**Characterized by** the fact that the system also contains a database (1,3) holding a plurality of archetypical procedural elements (Tabulae), each one of them expressing an archetype of a particular category of entities that can be shown and that the generation system controls the execution of the procedural elements (Tabulae) relative to entities of the virtual world to visualize; the controlled procedural elements (Tabulae) generate the low-level data needed by the rendering pipeline to create the virtual world images on the visualization system.

20. A system, as claimed in claim 19, **characterized by** the fact that each procedural element (Tabula) contains:
a. A distinctive data section (DP), needed to create the low-level data of the relative entity that can be created
b. A procedural section (PP) and
c. An interface section (IP), to define the created entity parameters.

21. A system, as claimed in claim 19, **characterized by** the fact that main procedural elements (Tabulae) are provided, connected in a logical way to second level procedural elements (Tabulae); the main procedural elements (Tabulae) define more complex entities and the second level procedural elements (Tabulae) define simpler entities.

22. A system, as claimed in claim 19, **characterized by** the fact that the generation system contains guided procedures, of the wizard type, to create a virtual world.

23. A system, as claimed in claim 19, **characterized by** the fact that at least some of the procedural elements (Cellulae) define virtual world geometrical limits in a gerarchical fashion.

24. A system, as claimed in claim 19, **characterized by** the fact that the database (1,3) is at least partially stored on the memory of the user terminal (CLIENT),

25. A system, as claimed in claim 19, **characterized by** the fact that the database (1,3) is at least partially stored on the memory of a remote computer (SERVER) the user terminal (CLIENT) is connected to through a data network (NET), where the database (1,3) is accessible through the network by a plurality of user terminals (CLIENT).

26. A system, as claimed in claim 19, **characterized by** the fact that the database (1,3) is at least partially stored on the memory of the user terminal (CLIENT) and contains a collection of base procedural elements (Tabulae) and by the fact that the user terminal (CLIENT) receives from a remote computer (SERVER) procedural elements (Tabulae) containing a reference to an alternative procedural element surely present into the local database (1,3) for each one; the set of usable alternative procedural elements make the collection of *base procedural elements.*
